(19) 

Europäisches Patentamt
European Patent Office
Office européen des brevets

(11) **EP 3 766 679 B1**

(12) **EUROPEAN PATENT SPECIFICATION**

(45) Date of publication and mention of the grant of the patent:
**01.03.2023 Bulletin 2023/09**

(21) Application number: **20186148.1**

(22) Date of filing: **16.07.2020**

(51) International Patent Classification (IPC):
**B29D 30/06** *(2006.01)*      **B29D 30/42** *(2006.01)*
**G01B 21/06** *(2006.01)*      **G01N 21/89** *(2006.01)*

(52) Cooperative Patent Classification (CPC):
**B29D 30/0681; B29D 30/42; G01N 21/8914;**
B29D 2030/0682; B29D 2030/427; G01B 11/028;
G01N 2021/8472

(54) **EDGE DETECTION DEVICE AND PRODUCTION METHOD FOR PNEUMATIC TIRE**

KANTENERKENNUNGSVORRICHTUNG UND HERSTELLUNGSVERFAHREN FÜR LUFTREIFEN

DISPOSITIF DE DÉTECTION DE BORD ET PROCÉDÉ DE PRODUCTION DE PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.07.2019   JP 2019133495
19.07.2019   JP 2019133990**

(43) Date of publication of application:
**20.01.2021   Bulletin 2021/03**

(73) Proprietor: **Sumitomo Rubber Industries, Ltd.
Kobe-shi, Hyogo-ken 651-0072 (JP)**

(72) Inventors:
• **FUKUDA, Kazuyuki
Kobe-shi, Hyogo 651-0072 (JP)**

• **ITO, Akihiro
Kobe-shi, Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A1- 2 078 955        WO-A1-2005/093368
WO-A1-2010/013553        DE-A1-102012 016 587
JP-A- 2001 201 335        JP-A- 2015 000 541
US-B1- 6 280 548**

EP 3 766 679 B1

**Description**

BACKGROUND OF THE INVENTION

Field of the Invention

The present invention relates to an edge detection device. Specifically, the present invention relates to an edge detection device for detecting an edge of one sheet located on another sheet in a composite sheet formed by attaching at least two sheets such that the positions of edges of the sheets are displaced in a width direction. Furthermore, the present invention relates to a production method for a pneumatic tire including an inner liner and chafers.

Description of the Background Art

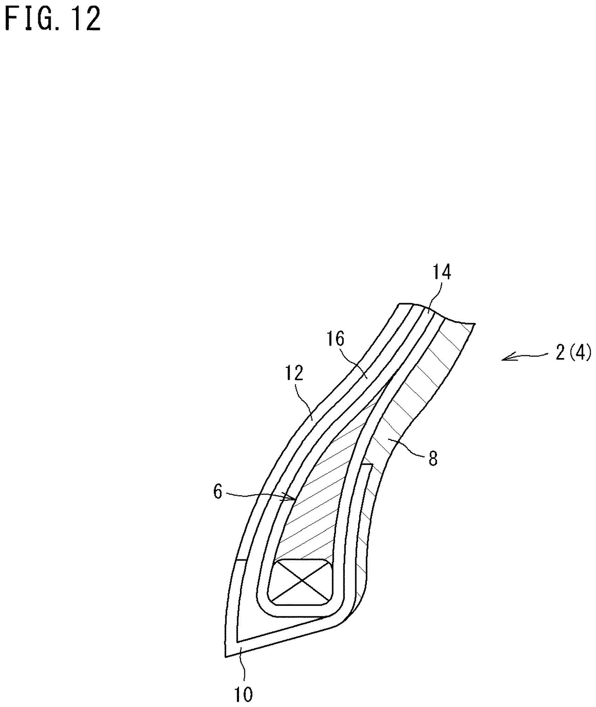

FIG. 12 shows a bead portion 4 of a tire 2. In the bead portion 4, a clinch 8 that comes into contact with a flange of a rim is located axially outward of a bead 6. The clinch 8 is formed from a crosslinked rubber. A chafer 10 that comes into contact with a seat of the rim is located radially inward of the bead 6. The chafer 10 includes a fabric and a rubber with which the fabric is impregnated. An inner liner 12 that forms the inner surface of the tire 2 is located axially inward of the bead 6. The inner liner 12 is formed from a crosslinked rubber. An insulation 16 is located between the inner liner 12 and a carcass 14. The insulation 16 is formed from a crosslinked rubber.

Although not described in detail, a tire in an unvulcanized state (hereinafter, also referred to as a green tire) is molded by combining members such as the bead 6 and the carcass 14 in production of the tire 2. The tire 2 is obtained by vulcanizing the green tire.

In molding the green tire, a composite sheet (hereinafter, also referred to as a composite liner sheet) is prepared by combining the chafer 10, the inner liner 12, and the insulation 16 that are molded in a sheet shape.

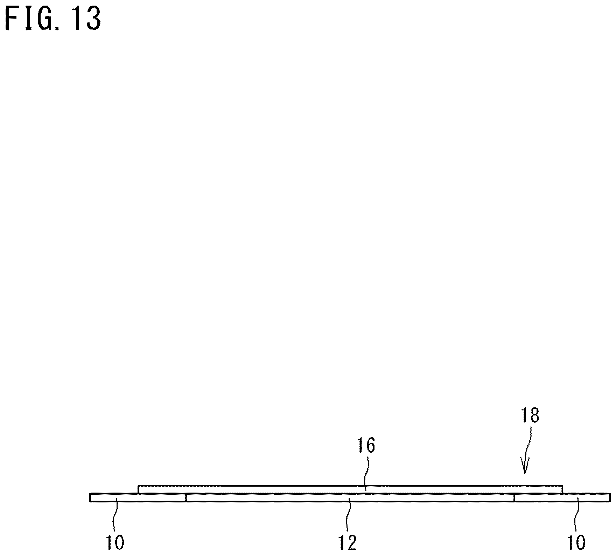

FIG. 13 shows a cross-section of a composite liner sheet 18. In FIG. 13, the right-left direction is the width direction of the composite liner sheet 18. The direction perpendicular to the surface of the sheet is the longitudinal direction of the composite liner sheet 18.

The composite liner sheet 18 shown in FIG. 13 includes a pair of the chafers 10, the inner liner 12, and the insulation 16. In the composite liner sheet 18, the width of the inner liner 12 is smaller than the width of the insulation 16, and the entire inner liner 12 is laminated on the insulation 16. The pair of the chafers 10 are each laminated on a portion, of the insulation 16, which projects outward in the width direction from the inner liner 12.

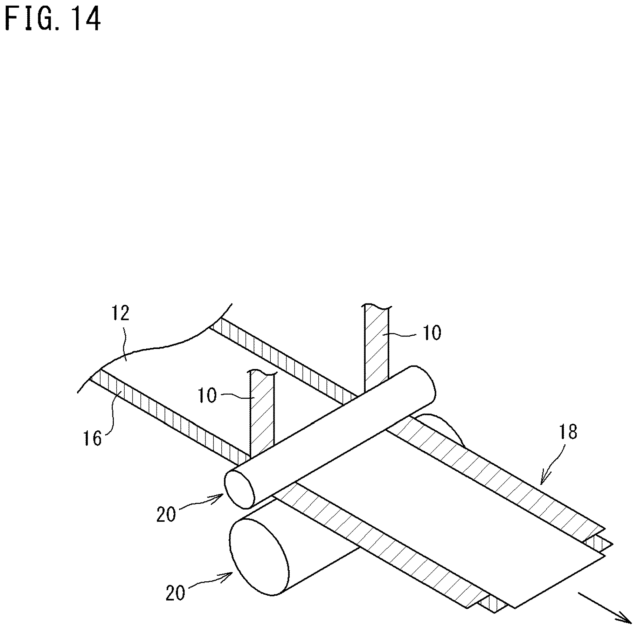

FIG. 14 shows an example of a method for molding the composite liner sheet 18. As shown in FIG. 14, the inner liner 12 is attached to the insulation 16, and the chafers 10 are attached to the portions, of the insulation 16, which project from the inner liner 12. The insulation 16, the inner liner 12, and the pair of the chafers 10 are press-bonded by rolls 20. Accordingly, the composite liner sheet 18 is obtained.

The positions of the edges of the insulation 16, the inner liner 12, and the chafers 10 in the composite liner sheet 18 affect the positions of the edges of the respective members in the cross-section of the tire 2 shown in FIG. 12. Thus, an apparatus that can grasp the width of a sheet and an edge position of the sheet has been developed (for example, JP 2001-201335 A).

WO 2005/093368 A1 discloses an edge detection device according to the preamble of claim 1.

EP 2 078 955 A1 relates to an inspection system for tire surfaces capable of inspecting tires with regard to roundness, surface unevenness, dirty marks, flaws and the like. The system includes a line camera and illuminating units, each consisting of first and second light projectors.

DE 10 2012 016 587 A1 discusses the inspection of splices of material stripes for tire blanks, the material stripes being wound on a reel. Laser sources and cameras are mounted in the vicinity of the reel. The laser sources and cameras are aligned along a direction parallel to the axis of the reel.

For example, JP 2015-541 A discloses a production method for a pneumatic tire, including a composite liner sheet forming step of forming a composite liner sheet obtained by combining sheet-shaped chafers and an unvulcanized sheet-shaped liner in which an inner liner and an insulation are joined together. The composite liner sheet forming step includes a splicing step of splicing the sheet-shaped chafers to edge portions of the sheet-shaped liner on both sides in a tire axial direction.

Rubbers used for the members of the tire 2 contain carbon black. Thus, the color of each of the members forming the tire 2 is black. Sheets having the same black color are laminated, and thus it is not easy to detect the edges of the sheets.

If each sheet has a certain thickness, the edges of the sheets can be detected, for example, using a displacement sensor. However, in the case where thin sheets are used for members of the tire 2 from the viewpoint of weight reduction, it is difficult to detect the edges of the sheets using the displacement sensor.

In addition, in JP 2015-541 A, no study is made for accurately overlapping the sheet-shaped chafers and the sheet-shaped liner.

US 6,280,548 B1 discloses a production method for a pneumatic tire in accordance with the preamble of claim 5, and WO 2010/013553 A1 discloses a method of inspecting a tire component member for judging whether there is an abnormality.

The present invention has been made in view of the above circumstances, and an object of the present invention is to provide an edge detection device that can detect an edge position of a sheet. Furthermore, an object of the present invention is to provide a production method for a pneumatic tire, which allows a composite liner sheet, in which sheet-shaped chafers and a sheet-shaped liner are accurately overlapped, to be formed.

SUMMARY OF THE INVENTION

An edge detection device according to independent claim 1 of the present invention is an edge detection device for detecting edges of one sheet located on another sheet in a composite sheet formed by attaching at least two sheets such that positions of edges of the sheets are displaced in a width direction, the edge detection device including: a line camera configured to take an image of the entirety in the width direction of the composite sheet; and a pair of lightings configured to apply light to the composite sheet. The pair of lightings is disposed with the line camera located therebetween in a longitudinal direction of the composite sheet. To a portion to which light of one lighting is applied, light of the other lighting is applied. A field of view of the line camera includes the edges of the one sheet located on the other sheet.

Preferably, in the edge detection device, the line camera takes an image in the width direction of the composite sheet located directly below the line camera.

Preferably, in the edge detection device, an angle formed by a direction of the light of the one lighting with respect to an optical axis of the line camera is equal to an angle formed by a direction of the light of the other lighting with respect to the optical axis of the line camera.

Preferably, the edge detection device includes a conveyance means configured to convey the composite sheet in the longitudinal direction thereof.

A production method for a pneumatic tire according to independent claim 5 of the present invention is a production method for a pneumatic tire including a liner and a pair of chafers disposed on both end portions in a tire axial direction of the liner, the production method including a composite liner sheet forming step of forming a composite liner sheet obtained by combining an unvulcanized sheet-shaped liner and a pair of unvulcanized sheet-shaped chafers. The composite liner sheet forming step includes: a liner forming step of forming the sheet-shaped liner by overlapping a first rubber sheet and a second rubber sheet wider than the first rubber sheet; a detection step of detecting both ends of the first rubber sheet; and an attaching step of attaching the sheet-shaped liner and each of the sheet-shaped chafers on the basis of positions of detected both ends of the first rubber sheet.

Preferably, in the production method for the pneumatic tire, an imaging means for taking an image of both ends of the first rubber sheet is used in the detection step.

Preferably, in the production method for the pneumatic tire, in the sheet-shaped liner, the second rubber sheet extends to outer sides of both ends of the first rubber sheet.

Preferably, in the production method for the pneumatic tire, in the attaching step, the second rubber sheet and the sheet-shaped chafers overlap each other on the outer sides of both ends of the first rubber sheet.

The edge detection device according to the present invention can detect an edge position of a sheet. The edge detection device can contribute to production of a tire having high quality. In the production method for the pneumatic tire according to the present invention, overlapping positions of a sheet-shaped liner and a pair of sheet-shaped chafers are determined on the basis of both ends of the first rubber sheet detected in the detection step. Accordingly, in the production method for the pneumatic tire according to the present invention, a composite liner sheet obtained by combining the sheet-shaped liner and the sheet-shaped chafers can be formed accurately.

BRIEF DESCRIPTION OF THE DRAWINGS

FIG. 1 is a front view showing an outline of an edge detection device according to an embodiment of the present invention;
FIG. 2 is a plan view of the edge detection device;
FIG. 3 is an image taken by the edge detection device;
FIG. 4 is a cross-sectional view of a right half showing an example of a pneumatic tire formed by a production method according to the present invention;
FIG. 5 is a cross-sectional view of a composite liner sheet;
FIG. 6(a) is a side view conceptually showing a liner forming step, and FIG. 6(b) is a cross-sectional view of a sheet-shaped liner;

FIG. 7 is a perspective view conceptually showing a detection step and an attaching step;

FIG. 8(a) is a plan view conceptually showing a state where a sheet-shaped chafer is conveyed, and FIG. 8(b) is a cross-sectional view taken along a line A-A in FIG. 8(a);

FIG. 9(a) is a cross-sectional view conceptually showing a composite liner sheet winding step, FIG. 9(b) is a cross-sectional view conceptually showing a carcass ply winding step and a bead core mounting step, and FIG. 9(c) is a cross-sectional view conceptually showing a shaping step;

FIG. 10 is a perspective view showing a modification of a production apparatus;

FIG. 11(a) is a graph representing the accuracy of composite liner sheets produced by a production method according to an embodiment, and FIG. 11(b) is a graph representing the accuracy of composite liner sheets produced by a production method of a comparative example;

FIG. 12 is a cross-sectional view showing a bead portion of a tire;

FIG. 13 is a cross-sectional view showing a composite sheet composed of a plurality of sheets; and

FIG. 14 is a perspective view illustrating a method for molding a conventional composite sheet.

DESCRIPTION OF THE PREFERRED EMBODIMENTS

Hereinafter, the present invention will be described in detail based on preferred embodiments with appropriate reference to the drawings.

[First Embodiment: Edge Detection Device]

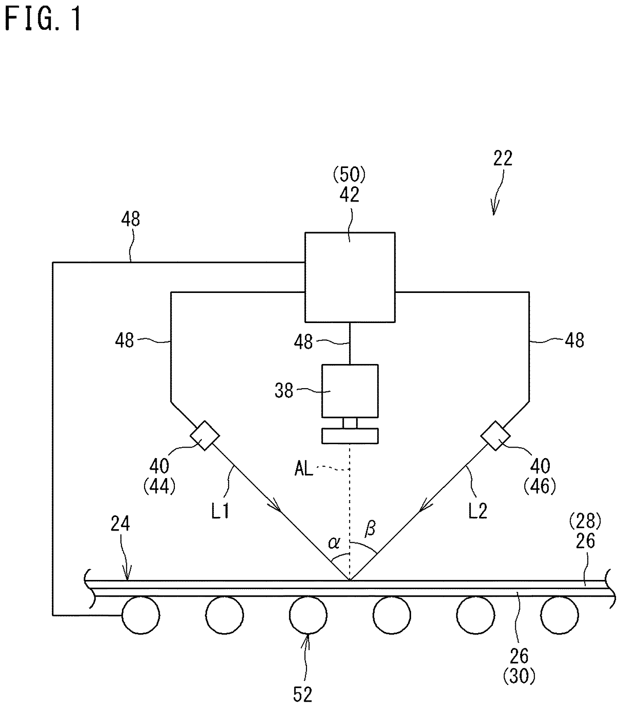

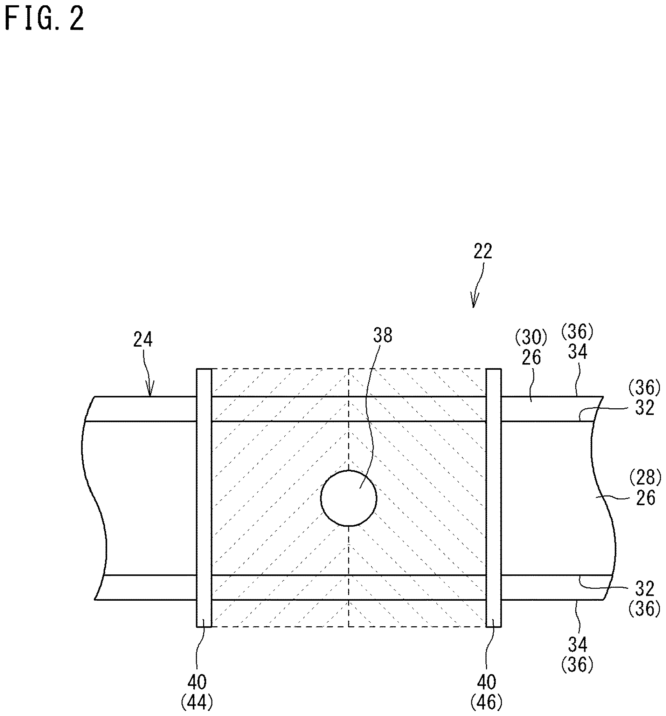

FIG. 1 and FIG. 2 show an outline of an edge detection device 22 according to an embodiment of the present invention. The edge detection device 22 is a device for detecting an edge of one sheet located on another sheet in a composite sheet 24 formed by attaching at least two sheets such that the positions of edges of the sheets are displaced in a width direction.

In FIG. 1, the right-left direction is the longitudinal direction of the composite sheet 24. The direction perpendicular to the surface of the sheet is the width direction of the composite sheet 24. In FIG. 2, the right-left direction is the longitudinal direction of the composite sheet 24, and the up-down direction is the width direction of the composite sheet 24.

[Composite Sheet 24]

The composite sheet 24 shown in FIG. 1 and FIG. 2 includes two sheets 26 having different widths. In the composite sheet 24, a narrow first sheet 28 is laminated on a wide second sheet 30.

As shown in FIG. 2, in the composite sheet 24, edges 32 of the first sheet 28 are located inward of edges 34 of the second sheet 30 in the width direction. In other words, the edges 32 of the first sheet 28 are located so as to be displaced inward in the width direction from the edges 34 of the second sheet 30. The composite sheet 24 is formed by attaching the two sheets 26 such that the positions of the edges 36 of the sheets 26 are displaced in the width direction. The edges 32 of the first sheet 28 are located on the second sheet 30.

The sheet 26 that is the composite sheet 24 is obtained by processing a rubber in an unvulcanized state into a sheet shape in a molding machine such as a calender roll. The sheet 26 that is the composite sheet 24 may be a rubberized cord member (not shown) including a large number of aligned cords and a rubber covering these cords.

The rubber in an unvulcanized state (hereinafter, also referred to as an unvulcanized rubber) is obtained by mixing a base rubber and chemicals using a kneading machine such as a Banbury mixer. Examples of the base rubber include natural rubber (NR), butadiene rubber (BR), styrene-butadiene rubber (SBR), isoprene rubber (IR), ethylenepropylene rubber (EPDM), chloroprene rubber (CR), acrylonitrile-butadiene rubber (NBR), and isobutylene-isoprene-rubber (IIR). Examples of the chemicals include reinforcing agents such as carbon black and silica, plasticizers such as aromatic oil, fillers such as zinc oxide, lubricants such as stearic acid, antioxidants, processing aids, sulfur, and vulcanization accelerators. Selection of a base rubber and chemicals, the amounts of the selected chemicals, etc., are determined as appropriate according to the specifications of a component for which the rubber is used.

In the composite sheet 24 shown in FIG. 1 and FIG. 2, the first sheet 28 is the inner liner 12 in the composite liner sheet 18 shown in FIG. 13. The second sheet 30 is the insulation 16 in the composite liner sheet 18 shown in FIG. 13. The composite liner sheet 18 shown in FIG. 13 is obtained by attaching the chafers 10 as third sheets to the portions, of the second sheet 30, which protrude from the first sheet 28. The composite sheet 24 obtained by attaching the narrow first sheet 28 as the inner liner 12 to the wide second sheet 30 as the insulation 16 is also referred to as a liner. The composite liner sheet 18 is a composite sheet obtained by attaching the chafers 10 to the liner.

In the composite sheet 24, the first sheet 28 and the second sheet 30 have the same color. An unvulcanized rubber for the first sheet 28 and an unvulcanized rubber for the second sheet 30 contain carbon black. The colors of the first sheet 28 and the second sheet 30 are black.

[Edge Detection Device 22]

The edge detection device 22 forms a part of a production line (also referred to as a production apparatus) for the tire 2. Although not shown, in the production line, the edge detection device 22 is located downstream of a molding machine for molding the composite sheet 24 by attaching the first sheet 28 and the second sheet 30. The edge detection device 22 is located upstream of a molding machine for molding the composite liner sheet 18 shown in FIG. 13 by attaching two third sheets to the composite sheet 24. In FIG. 1 and FIG. 2, the left side of the surface of the sheet is the upstream side of the edge detection device 22, and the right side of the surface of the sheet is the downstream side of the edge detection device 22.

The edge detection device 22 (hereinafter, also referred to as device 22) includes a line camera 38, a pair of lightings 40, and a control means 42.

The line camera 38 is located above the composite sheet 24. In the device 22, the line camera 38 takes an image of the composite sheet 24 located directly below the line camera 38. The line camera 38 includes light receiving elements that are not two-dimensionally arranged as in an area camera but are aligned linearly. The line camera 38 takes an image in the width direction of the composite sheet 24. An example of the line camera 38 is "XG-X series line camera" manufactured by Keyence Corporation.

The pair of lightings 40 are disposed with the line camera 38 located therebetween in the longitudinal direction of the composite sheet 24. Each lighting 40 applies light to the composite sheet 24. In the device 22, the lighting 40 located on the upstream side is a first lighting 44, and the lighting 40 located on the downstream side is a second lighting 46.

Examples of each lighting 40 include an area lighting and a line lighting. From the viewpoint of being able to linearly and evenly apply light to the composite sheet 24 along the width direction, a line lighting is preferable. As a light source used for this lighting 40, a light source capable of emitting light with high directivity is preferably used. An example of such a light source is an LED light source. As each lighting 40 of the device 22, a line lighting in which a large number of LED light sources are aligned linearly is more preferable.

The control means 42 is composed of, for example, a microcomputer having a calculation unit such as a CPU, a storage unit including a RAM and a ROM, and the like, and performs a predetermined function by the calculation unit executing a program stored in the storage unit. In the device 22, the components included in the device 22, such as the line camera 38, are connected to the control means 42 by communication cables 48. Although not described in detail, the control means 42 controls operation of these components.

In the device 22, the line camera 38 takes an image of the entirety in the width direction of the composite sheet 24. The field of view of the line camera 38 includes the edges 32 of the first sheet 28 located on the second sheet 30.

In the device 22, the lightings 40 located on both sides of the line camera 38 apply light to the composite sheet 24. The light of the second lighting 46 is applied to a portion to which the light of the first lighting 44 is applied. The light of the first lighting 44 may be applied to a portion to which the light of the second lighting 46 is applied. The line camera 38 takes an image of the portion to which the light of the two lightings 40 is applied.

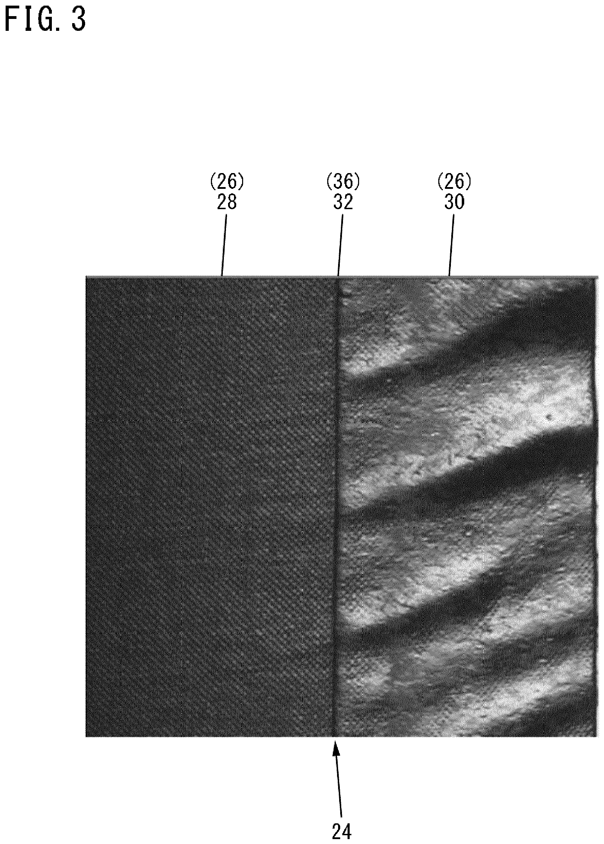

FIG. 3 shows a part of an image taken by the line camera 38 of the device 22. In the device 22, an image reflecting the surface state of the composite sheet 24, particularly, an image in which the contrast at the boundary position between the first sheet 28 and the second sheet 30 is reflected, is taken. Thus, in the image, the edge 32 of the first sheet 28 located on the second sheet 30 is clearly seen as shown in FIG. 3.

In the device 22, the image taken by the line camera 38 is inputted as data to the control means 42. In the control means 42, the data is analyzed by a well-known program for image processing, which is stored in advance in the storage unit. Accordingly, the positions of the edges 32 of the first sheet 28 extending in the longitudinal direction of the composite sheet 24 are detected. In the device 22, the control means 42 has a function as an analysis means 50 that analyzes data of an image taken by the line camera 38. The device 22 includes the analysis means 50 that analyzes data of an image taken by the line camera 38.

In the device 22, even though the first sheet 28 and the second sheet 30 have the same color and have a black color, the edges 32 of the first sheet 28 located on the second sheet 30 are clearly seen in the image taken by the line camera 38. The positions of the edges 36 of the sheet 26 are detected on the basis of the image in which the edges 36 are seen.

As described above, the composite liner sheet 18 shown in FIG. 13 is formed by attaching the two third sheets to the composite sheet 24 in the molding machine located on the downstream side. The molding machine can accurately attach the third sheets to proper positions by reflecting position data of the detected edges 36 in an operating program for forming the composite liner sheet 18. The device 22 can also confirm the width of the first sheet 28 laminated on the second sheet 30, on the basis of the position data of the detected edges 36. The edge detection device 22 can contribute to production of the tire 2 having high quality.

In FIG. 1, a dotted line AL represents the optical axis of the line camera 38. The optical axis AL extends perpendicularly to the longitudinal direction of the composite sheet 24. A solid line L1 represents the direction of the light of the first lighting 44, and a solid line L2 represents the direction of the light of the second lighting 46. The direction of the light of each lighting 40 is adjusted by the direction of the lighting 40 with respect to the composite sheet 24.

In FIG. 1, an angle $\alpha$ is an angle formed by the direction L1 of the light of the first lighting 44 with respect to the optical axis AL of the line camera 38. An angle $\beta$ is an angle formed by the direction L2 of the light of the second lighting 46 with respect to the optical axis AL of the line camera 38.

In the device 22, the angle $\alpha$ formed by the direction L1 of the light of the first lighting 44 with respect to the optical axis AL of the line camera 38 is equal to the angle $\beta$ formed by the direction L2 of the light of the second lighting 46 with respect to the optical axis AL of the line camera 38. In the device 22, since an image reflecting the surface state of the composite sheet 24 is taken, the edges 32 of the first sheet 28 located on the second sheet 30 are more clearly seen in the image. Since an image in which the edges 36 are more clearly seen is obtained, the device 22 can reliably detect the positions of the edges 36 of the sheet 26. From this viewpoint, in the device 22, the angle $\alpha$ formed by the direction L1 of the light of the first lighting 44 with respect to the optical axis AL of the line camera 38 is preferably equal to the angle $\beta$ formed by the direction L2 of the light of the second lighting 46 with respect to the optical axis AL of the line camera 38. In the device 22, when the difference between the angle $\alpha$ and the angle $\beta$ is not less than -3° and not greater than 3°, it is determined that the angle $\alpha$ and the angle $\beta$ are equal to each other.

In the device 22, from the viewpoint of obtaining an image in which the edges 36 are more clearly seen, the angle $\alpha$ formed by the direction L1 of the light of the first lighting 44 with respect to the optical axis AL of the line camera 38 is preferably not less than 30° and preferably not greater than 60°. From the same viewpoint, the angle $\beta$ formed by the direction L2 of the light of the second lighting 46 with respect to the optical axis AL of the line camera 38 is preferably not less than 30° and preferably not greater than 60°. In the device 22, further preferably, the angle $\alpha$ formed by the direction L1 of the light of the first lighting 44 with respect to the optical axis AL of the line camera 38 is not less than 30° and not greater than 60°, the angle $\beta$ formed by the direction L2 of the light of the second lighting 46 with respect to the optical axis AL of the line camera 38 is not less than 30° and not greater than 60°, and the angle $\alpha$ and the angle $\beta$ are equal to each other.

The device 22 can include a conveyance means 52 that conveys the composite sheet 24 in the longitudinal direction thereof. The device 22 including the conveyance means 52 can continuously or intermittently take images in the width direction of the composite sheet 24 while conveying the composite sheet 24. The device 22 can detect the positions of the edges 36 of the sheet 26 over the entirety in the longitudinal direction of the composite sheet 24. The device 22 contributes to production of the tire 2 having high quality. From this viewpoint, the device 22 preferably includes the conveyance means 52 that conveys the composite sheet 24 in the longitudinal direction thereof.

In the device 22 shown in FIGS. 1 and 2, a roller conveyor is used as the conveyance means 52. In the device 22, the conveyance means 52 is not limited to the roller conveyor. For example, a belt conveyor may be used as the conveyance means 52.

As described above, the edge detection device 22 according to the present invention can detect the positions of the edges 36 of the sheet 26. The edge detection device 22 can contribute to production of the tire 2 having high quality.

[Second Embodiment: Production Method for Pneumatic Tire]

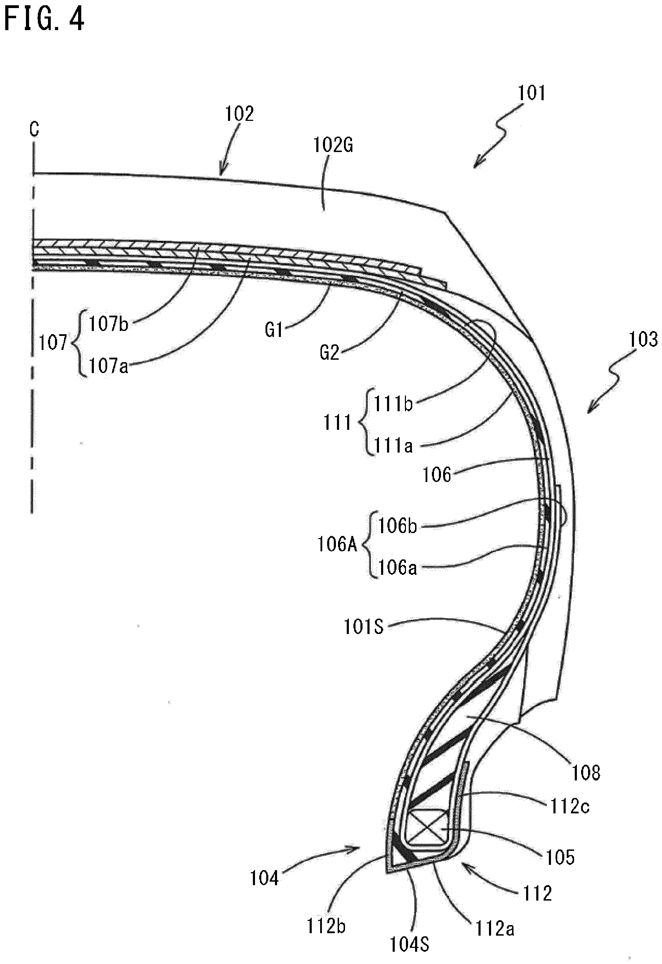

FIG. 4 is a cross-sectional view showing an example of a pneumatic tire (hereinafter, sometimes referred to simply as "tire") 101 formed by the production method according to the present invention. FIG. 4 shows, for example, a tire 101 for a passenger car. The present invention can also be applied to tires in the other categories such as tires for a motorcycle and tires for a heavy-duty vehicle.

As shown in FIG. 4, the tire 101 according to the present embodiment includes a carcass 106, an air-impermeable liner 111, and chafers 112 for preventing rim displacement.

The carcass 106 of the present embodiment extends from a tread portion 102 through sidewall portions 103 to bead cores 105 of bead portions 104. The carcass 106 is composed of, for example, one carcass ply 106A in which carcass cords are arranged. In the present embodiment, the carcass ply 106A includes a main body portion 106a extending between the bead cores 105 on both sides, and a pair of turned-up portions 106b connected to the main body portion 106a and turned up around the bead cores 105 from the inner side to the outer side in the tire axial direction. The carcass 106 is not limited to such a mode, and various well-known modes are adopted.

On the outer side in the tire radial direction of the carcass 106, for example, a tread reinforcing layer 107 including a belt layer 107a or a band layer 107b, and a tread rubber 102G forming the outer surface of the tread portion 102 are disposed. A bead apex 108 formed from a hard rubber is disposed between the main body portion 106a and each turned-up portion 106b. Various well-known modes are adopted for the tread reinforcing layer 107, the tread rubber 102G, and the bead apex 108.

The liner 111 is, for example, disposed on the inner side in the tire radial direction of the carcass 106 and forms an inner cavity surface 101S of the tire 101. In the present embodiment, the liner 111 is formed with a two-layer structure including an inner layer portion 111a (also referred to as inner liner) extending along the inner cavity surface 101S and an outer layer portion 111b (also referred to as insulation) disposed on the outer side of the inner layer portion 111a.

The inner layer portion 111a is composed of, for example, an air-impermeable isobutylene-isoprene-rubber-based first rubber G1. In the present embodiment, isobutylene-isoprene-rubber, halogenated isobutylene-isoprene-rubber which is a derivative thereof, and a blend rubber containing 60% by mass or more of isobutylene-isoprene-rubber or halogenated isobutylene-isoprene-rubber in a rubber component are adopted for the first rubber G1. In the case of the blend rubber, diene-based rubbers such as NR (natural rubber), SBR (styrene-butadiene rubber), BR (butadiene rubber), and IR (isoprene rubber) are suitable as the balance rubber.

The outer layer portion 111b is composed of, for example, an NR-based second rubber G2 having excellent adhesiveness. Such an outer layer portion 111b enhances the adhesive strength between the inner layer portion 111a and the carcass 106. In the present embodiment, NR and a blend rubber containing 60% by mass or more of isobutylene-isoprene-rubber or halogenated isobutylene-isoprene-rubber in a rubber component are adopted for the second rubber G2. In the case of the blend rubber, diene-based rubbers such as SBR, BR, and IR are suitable as the balance rubber.

Each chafer 112 is, for example, a rubber sheet-shaped member reinforced with a fiber material. In the present embodiment, the chafer 112 is formed as a canvas chafer in which a canvas fabric formed from an organic fiber such as aramid, nylon, and rayon is coated with a rubber. The chafer 112 is not limited to such a mode, and may have, for example, a well-known structure in which a cord array body is covered with a rubber.

The chafer 112 is formed to include, for example, a base portion 112a, an inner portion 112b, and an outer portion 112c. In the present embodiment, the base portion 112a extends along a bead bottom surface 104S. In the present embodiment, the inner portion 112b is bent on the inner side in the tire axial direction of the base portion 112a and extends along the inner cavity surface 101S. In the present embodiment, the outer end of the inner portion 112b is abutted against the inner end of the inner layer portion 11 1a of the liner 111. In the present embodiment, the outer portion 112c is bent on the outer side in the tire axial direction of the base portion 112a and extends along the turned-up portion 106b.

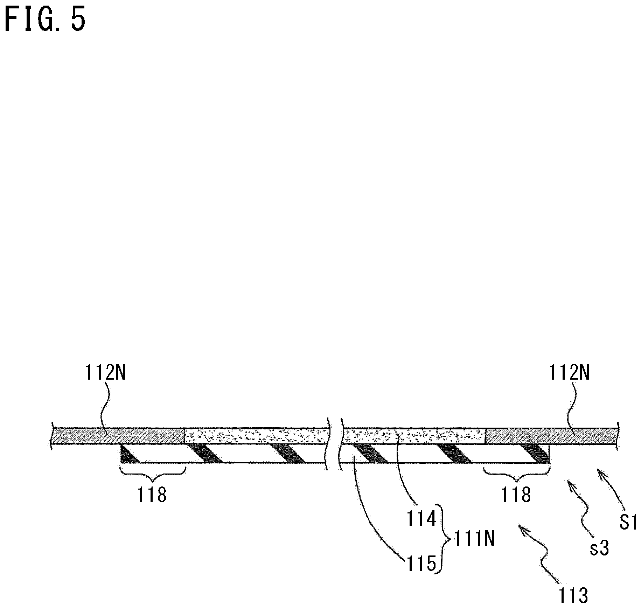

Next, a production method for the tire 101 will be described. The production method according to the present embodiment includes a composite liner sheet forming step S1 of forming a composite liner sheet 113 as shown in FIG. 5. The composite liner sheet 113 is obtained by combining an unvulcanized sheet-shaped liner 111N and a pair of unvulcanized sheet-shaped chafers 112N, 112N.

In the present embodiment, the composite liner sheet forming step S1 includes a liner forming step s1, a detection step s2, and an attaching step s3.

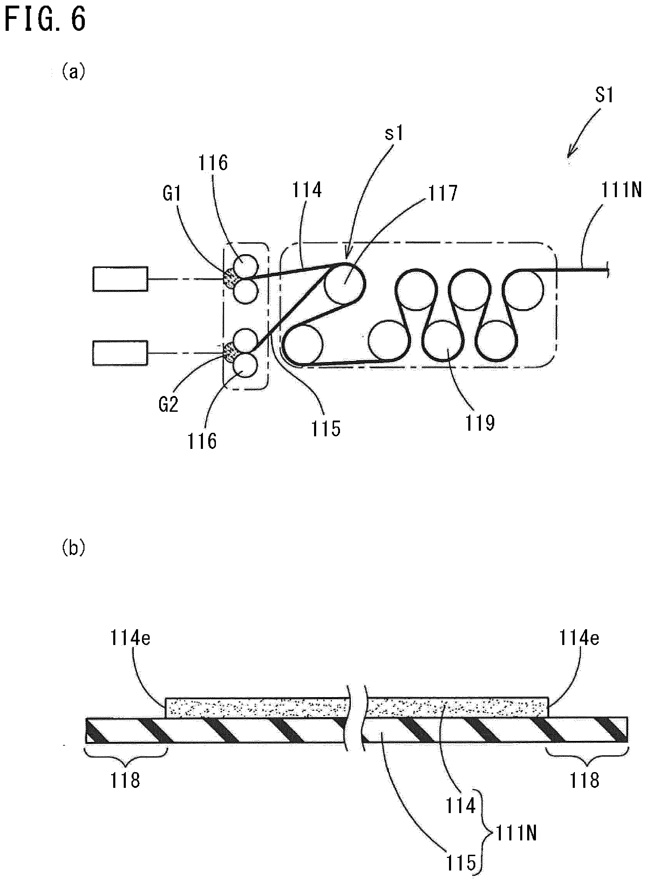

As shown in FIG. 6(a), in the liner forming step s1, the sheet-shaped liner 111N is formed by overlapping a first rubber sheet 114 and a second rubber sheet 115 that is wider than the first rubber sheet 114. The first rubber sheet 114 is obtained, for example, by rolling the first rubber G1 with a well-known calender means 116. The second rubber sheet 115 is obtained, for example, by rolling the second rubber G2 with a well-known calender means 116.

In the present embodiment, the sheet-shaped liner 111N is formed by overlapping the first rubber sheet 114 and the second rubber sheet 115 on a conveyance roller 117 having a well-known structure. As shown in FIG. 6(b), the sheet-shaped liner 111N includes a protruding portion 118 where the second rubber sheet 115 protrudes from the first rubber sheet 114. In the present embodiment, the protruding portion 118 is provided on each side in the width direction of the second rubber sheet 115.

The sheet-shaped liner 111N is cooled, for example, by passing on a cooling drum 119 having a well-known structure. The cooled sheet-shaped liner 111N, for example, may be rolled into a roll shape and then sent to the next detection step s2, or may be conveyed to the detection step s2 while being maintained in the sheet shape.

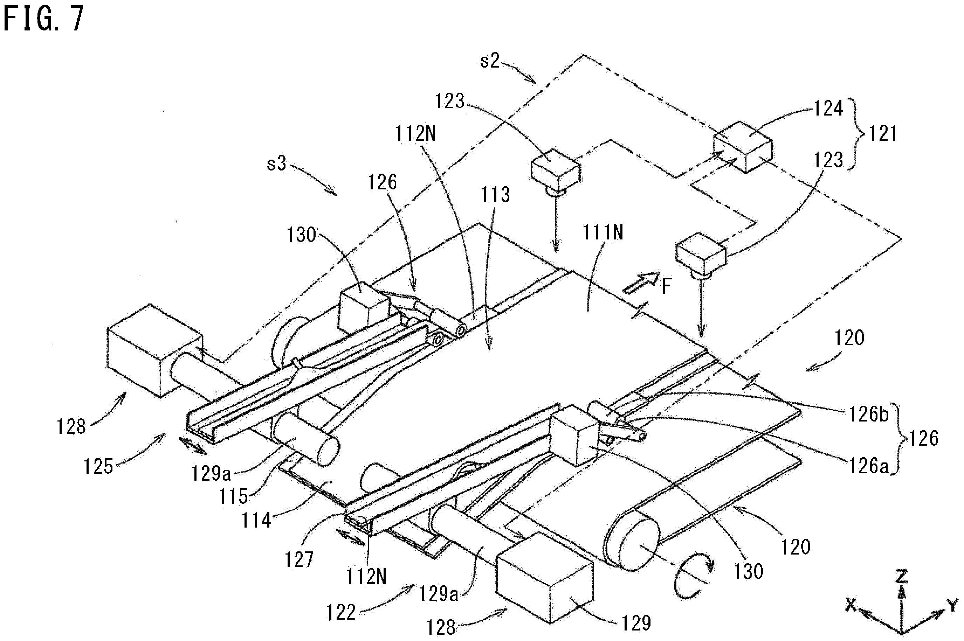

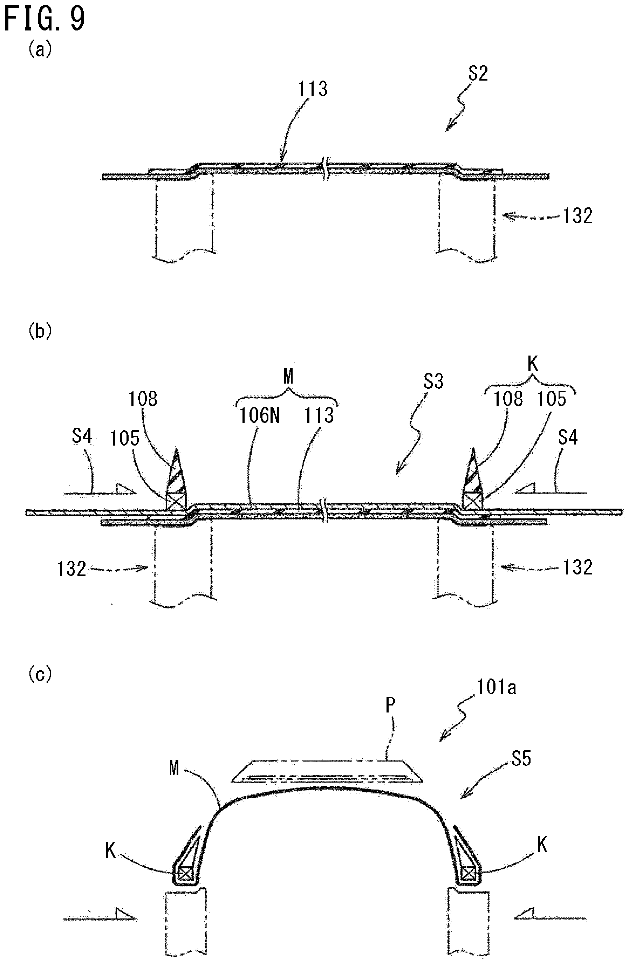

Next, the detection step s2 and the attaching step s3 are performed. In the detection step s2, both ends 114e, 114e of the first rubber sheet 114 of the sheet-shaped liner 111N are detected. In the attaching step s3, the sheet-shaped chafers 112N are attached to the sheet-shaped liner 111N on the basis of the positions of detected both ends 114e, 114e, whereby the composite liner sheet 113 is formed. FIG. 7 is a perspective view conceptually showing the detection step s2 and the attaching step s3. As shown in FIG. 7, in the present embodiment, the sheet-shaped liner 111N is conveyed by a well-known conveyor 120 with the second rubber sheet 115 being located at the lower side and the first rubber sheet 114 being located at the upper side. A well-known molding drum 132 (shown in FIG. 9(a)) is disposed on the downstream F side in the conveyance direction. The composite liner sheet 113 conveyed by the conveyor 120 is wound on the molding drum 132.

In the present description, the conveyance direction (longitudinal direction) of the sheet-shaped liner 111N is represented by an arrow Y The vertical (up-down) direction perpendicular to the arrow Y is represented by an arrow Z. Moreover, the width direction of the sheet-shaped liner 111N that is perpendicular to the arrow Y and the arrow Z is represented by an arrow X. The width direction X is, for example, a horizontal direction.

In the detection step s2 and the attaching step s3 of the present embodiment, a detection device 121 that detects both ends 114e (shown in FIG. 6(b)) of the first rubber sheet 114 and an attaching device 122 that attaches the sheet-shaped liner 111N and the sheet-shaped chafers 112N are used. The detection device 121 and the attaching device 122 form a part of a production apparatus 133 for the tire 101. The production apparatus 133 for the tire 101 includes the detection device 121 and the attaching device 122.

The detection device 121 includes, for example, an imaging means 123 and a control means 124.

For example, the imaging means 123 takes an image of both ends 114e, 114e of the first rubber sheet 114, acquires data of the image, and outputs electric signals corresponding to the positions of both ends 114e, 114e, to the control means 124. As such an imaging means 123, for example, a camera or a video camera, and in particular, a CCD camera such as a line scan camera of an image processing system (XG-X series) manufactured by Keyence Corporation is suitable. The CCD camera can accurately detect the positions of both ends 114e, 114e of the black first rubber sheet 114 disposed on the black second rubber sheet 115 by utilizing overlapping shadows of the rubber sheets. In the present embodiment, the imaging means 123 includes two CCD cameras. These CCD cameras are disposed so as to be spaced apart from each other in the width direction X. The detection device 121 may include a well-known distance measuring means (not shown) such as a laser displacement meter in place of the imaging means 123, and the distance measuring means may detect both ends 114e, 114e.

The control means 124 controls the attaching device 122 on the basis of the electric signals from the imaging means 123. Accordingly, the sheet-shaped liner 111N and the sheet-shaped chafers 112N can be attached accurately.

The control means 124 includes, for example, a calculation unit composed of a CPU (central processing unit), a storage unit in which control procedures and programs are stored in advance, and a working memory to which the control procedures are read from the storage unit (not shown). The control means 124 may be provided with a display unit for displaying a processing result and the like, and an operation unit to be operated by an operator. As such a control means 124, for example, a well-known programmable sequencer, microcomputer, personal computer, etc., are preferable.

In the present embodiment, the attaching device 122 includes applicators 125 and pressing rollers 126.

Each applicator 125 serves to supply the sheet-shaped chafer 112N to the sheet-shaped liner 111N on the conveyor 120. The applicator 125 includes, for example, a guide portion 127 that guides the sheet-shaped chafer 112N onto the conveyor 120, and a moving tool 128 that moves the guide portion 127. The applicator 125 includes, for example, a conveyance roller (not shown), and the sheet-shaped chafer 112N on the guide portion 127 is conveyed by the conveyance roller.

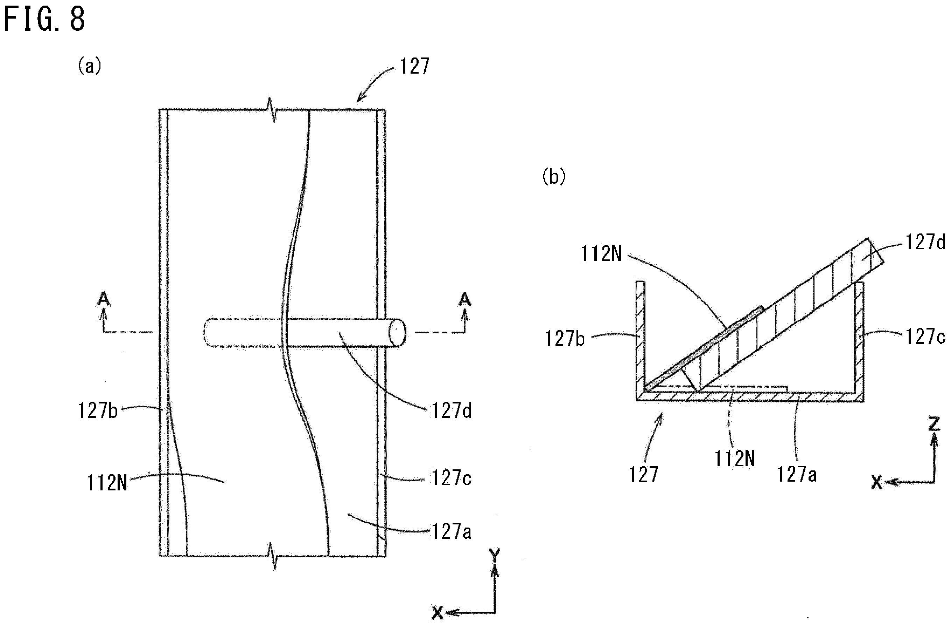

As shown in FIGS. 8(a) and (b), the guide portion 127 includes, for example, a placement piece 127a, a first rising piece 127b, and a second rising piece 127c. In the present embodiment, the sheet-shaped chafer 112N is placed on the placement piece 127a. In the present embodiment, the first rising piece 127b rises from one end in the width direction X of the placement piece 127a. In the present embodiment, the second rising piece 127c rises from the other end in the width direction X of the placement piece 127a. The placement piece 127a, the first rising piece 127b, and the second rising piece 127c extend along the conveyance direction Y Such a guide portion 127 can stably guide the sheet-shaped chafer 112N onto the sheet-shaped liner 111N without dropping the sheet-shaped chafer 112N from the placement piece 127a. In the present embodiment, the first rising piece 127b is disposed inward of the sheet-shaped liner 111N in the width direction X, and the second rising piece 127c is disposed outward of the sheet-shaped liner 111N in the width direction X.

In the present embodiment, the guide portion 127 is provided with a guide piece 127d that extends from the first rising piece 127b side of the placement piece 127a toward the second rising piece 127c side of the placement piece 127a so as to be inclined upward. The sheet-shaped chafer 112N on the placement piece 127a is conveyed while passing above the guide piece 127d and being supported by the guide piece 127d. Thus, one end in the width direction of the sheet-shaped chafer 112N is positioned along one end on the first rising piece 127b side of the placement piece 127a. Accordingly, the position in the width direction X of the sheet-shaped chafer 112N is accurately determined.

The guide piece 127d has, for example, a length larger than the width of the sheet-shaped chafer 112N. In the present embodiment, the guide piece 127d is formed of a rod-shaped member.

As shown in FIG. 7, in the present embodiment, the moving tool 128 is formed by a cylinder mechanism 129 having a well-known structure having a rod portion 129a that is extendable and contractible in the width direction X. The guide portion 127 is fixed to the rod portion 129a of the present embodiment. The position in the width direction X of the guide portion 127 is determined by extension/contraction of the rod portion 129a. The extension/contraction amount of the rod portion 129a is determined on the basis of the electric signal inputted to the control means 124 from the imaging means 123. Accordingly, the sheet-shaped chafer 112N guided by the guide portion 127 is moved to a predetermined position in the width direction X. Therefore, in the production method according to the present embodiment, the composite liner sheet 113 can be produced accurately. The moving tool 128 is not limited to such a cylinder mechanism, and may have, for example, a ball screw mechanism or a pinion rack mechanism.

Each pressing roller 126 serves, for example, to press and attach the sheet-shaped chafer 112N guided by the guide portion 127, to the sheet-shaped liner 111N. As the pressing roller 126 of the present embodiment, a roller having a well-known structure including a support shaft 126a extending in the width direction X and a roller portion 126b rotatably held by the support shaft 126a, is adopted. In the present embodiment, the support shaft 126a is held so as to be movable in three axial directions by a moving means 130 having a well-known structure and fixed to the guide portion 127. By such a detection device 121 and such an attaching device 122, the pair of sheet-shaped chafers 112N are accurately attached to predetermined positions on both sides of the sheet-shaped liner 111N to form the composite liner sheet 113. The composite liner sheet 113 is formed, for example, such that the sheet-shaped chafers 112N are abutted against both ends 114e, 114e of the first rubber sheet 114.

For example, the composite liner sheet 113 in which the overlapping position of the sheet-shaped chafer 112N and the sheet-shaped liner 111N is largely deviated from a predetermined position reduces the quality of the tire 101, such as in terms of uniformity. Therefore, for such a composite liner sheet 113, it is necessary to perform the attaching step s3 over again. Moreover, the tire 101 produced using the composite liner sheet 113 is discarded, for example, since air remains in the tire 101, in addition to deterioration of the uniformity. As described above, the composite liner sheet 113 in which the overlapping position is largely deviated from the predetermined position causes large production loss. In the production method for a pneumatic tire according to the present embodiment, each sheet-shaped chafer 112N can be attached such that the overlapping position coincides with the predetermined position, and thus the attaching step s3 can be inhibited from being performed over again and the tire 101 can be inhibited from being discarded. Thus, occurrence of production loss can be inhibited.

In the production method, after the composite liner sheet forming step S1, a composite liner sheet winding step S2, a carcass ply winding step S3, a bead core mounting step S4, and a shaping step S5 are performed.

As shown in FIG. 9(a), in the composite liner sheet winding step S2, for example, the composite liner sheet 113 is wound on the outer peripheral surface of the molding drum 132 having a well-known structure. As shown in FIG. 9(b), in the carcass ply winding step S3, for example, a sheet-shaped carcass ply 106N is wound on the outer side of the composite liner sheet 113 to form a cylindrical carcass laminate M. In the bead core mounting step S4, for example, a pair of bead core assemblies K each including the bead core 105 and the bead apex 108 are set on the outer peripheral surface of the carcass laminate M at both end sides thereof. As shown in FIG. 9(c), in the shaping step S5, for example, the carcass laminate M is shaped into a toroidal shape between the bead core assemblies K, K while bringing the bead core assemblies K, K closer to each other. Accordingly, the expansion portion of the carcass laminate M and a tread ring P that has been waiting on the outer side in the tire radial direction in advance and that forms the tread rubber 102G and the tread reinforcing layer 107 are joined together to form an unvulcanized green tire 101a. Various conventional methods are adopted for the composite liner sheet winding step S2, the carcass ply winding step S3, the bead core mounting step S4, and the shaping step S5.

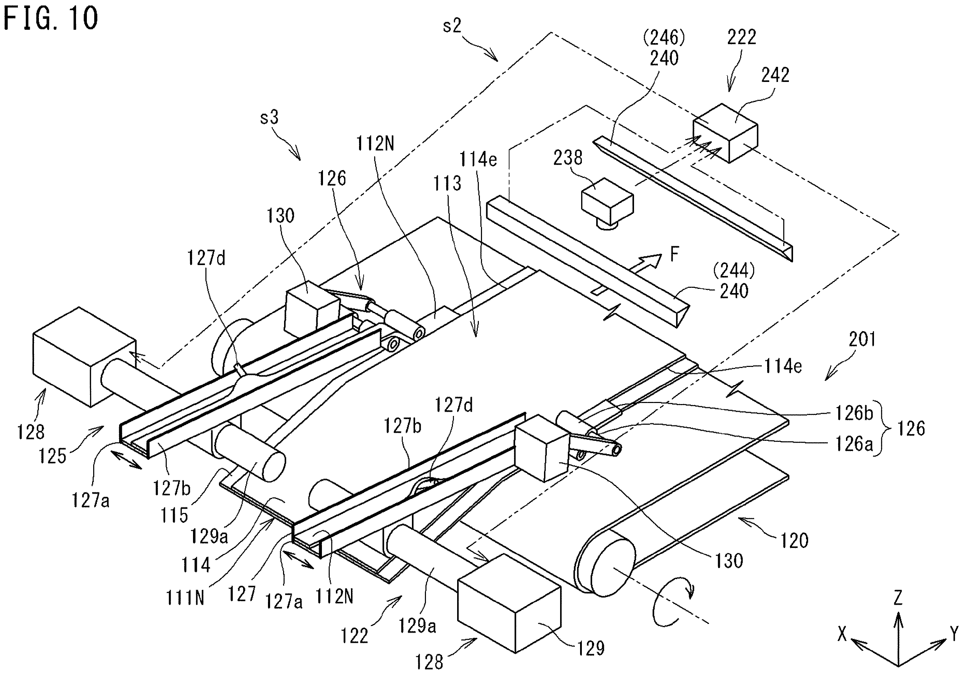

FIG. 10 shows a modification of the production apparatus 133 shown in FIG. 7. In a production apparatus 201, the edge detection device 22 shown in FIG. 1 is used as a detection device 222. In a production method using the production apparatus 201, both ends 114e of the first rubber sheet 114 are detected using the detection device 222 in the detection step s2.

In the description of the production method, the first rubber sheet 114 corresponds to the above-described first sheet 28. The ends 114e of the first rubber sheet 114 correspond to the edges 32 of the first sheet 28. The second rubber sheet 115 corresponds to the second sheet 30.

The production apparatus 201 has the same configuration as that of the production apparatus 133 shown in FIG. 7, except for the detection device 222. The components other than the detection device 222 are designated by the same reference characters, and the description thereof is omitted.

The detection device 222 includes a line camera 238, a pair of lightings 240, and a control means 242. The line camera 238 corresponds to the imaging means 123 of the detection device 121 shown in FIG. 7. The control means 242 corresponds to the control means 124 of the detection device 121 shown in FIG. 7.

In the detection device 222, the line camera 238 takes an image of the entirety in the width direction of a liner 111N corresponding to the above-described composite sheet 24. The field of view of the line camera 238 includes both ends 114e of the first rubber sheet 114 located on the second rubber sheet 115.

In the detection device 222, the lightings 240 located on both sides of the line camera 238 apply light to the liner 111N. Light of a second lighting 246 is applied to the portion to which light of a first lighting 244 is applied. The line camera 238 takes an image of the portion to which the light of the two lightings 240 is applied.

In the detection device 222, an image reflecting the surface state of the liner 111N, particularly, an image in which the contrast at the boundary position between the first rubber sheet 114 and the second rubber sheet 115 is reflected, is taken. Thus, even though the first rubber sheet 114 and the second rubber sheet 115 have the same color and have a black color, both ends 114e of the first rubber sheet 114 located on the second rubber sheet 115 are clearly seen in the image. The positions of both ends 114e of the first rubber sheet 114 are detected on the basis of the image.

In the attaching device 122, the sheet-shaped chafer 112N on the placement piece 127a is conveyed while passing above the guide piece 127d and being supported by the guide piece 127d. Thus, one end in the width direction of the sheet-shaped chafer 112N is positioned along one end on the first rising piece 127b side of the placement piece 127a. Accordingly, the position in the width direction X of the sheet-shaped chafer 112N is accurately determined.

The position in the width direction X of the guide portion 127 is determined by extension/contraction of the rod portion 129a. The extension/contraction amount of the rod portion 129a is determined on the basis of an electric signal inputted to the control means 242 from the line camera 238. Accordingly, the sheet-shaped chafer 112N guided by the guide portion 127 is moved to a predetermined position in the width direction X. Therefore, in the production method according to the present embodiment, the composite liner sheet 113 can be produced accurately.

In the production method, by the detection device 222 and the attaching device 122, the pair of sheet-shaped chafers 112N are accurately attached to predetermined positions on both sides of the sheet-shaped liner 111N to form the composite liner sheet 113. The composite liner sheet 113 is formed, for example, such that the sheet-shaped chafers 112N are abutted against both ends 114e, 114e of the first rubber sheet 114.

In the production method, the sheet-shaped chafers 112N are accurately attached to proper positions by reflecting position data of detected both ends 114e, 114e of the first rubber sheet 114 in an operating program for forming the composite liner sheet 113. The width of the first rubber sheet 114 laminated on the second rubber sheet 115 can also be confirmed on the basis of the position data of detected both ends 114e, 114e. With the production method, the tire 2 having high quality is produced. Furthermore, in the production method, each sheet-shaped chafer 112N can be attached such that the overlapping position coincides with the predetermined position, and thus the attaching step s3 can be inhibited from being performed over again and the tire 101 can be inhibited from being discarded. The production method can inhibit occurrence of production loss. With the production method, the tire 101 having high quality can be produced stably.

In the production method, the position at which an image for detecting both ends 114e, 114e of the first rubber sheet 114 is taken may be set upstream or downstream of the position at which the sheet-shaped chafers 112N are attached, as long as accurate position data of both ends 114e, 114e of the first rubber sheet 114 is acquired. From the viewpoint of attaching the sheet-shaped chafers 112N after grasping the positions of both ends 114e, 114e of the first rubber sheet 114, the position at which an image for detecting both ends 114e, 114e of the first rubber sheet 114 is taken is preferably set upstream of the position at which the sheet-shaped chafers 112N are attached.

Although the particularly preferred embodiments of the present invention have been described in detail above, the present invention is not limited to the above-described embodiments, and various modifications can be made to practice the present invention.

EXAMPLES

Hereinafter, the present invention will be described in more detail based on an example, etc. However, the present invention is not limited to the example.

In order to confirm the advantageous effects of the present invention, the composite liner sheet shown in FIG. 5 was produced using the detection device and the attaching device shown in FIG. 7, and the difference Δ between a predetermined position and a position to which each sheet-shaped chafer was actually attached was measured. For each of an example and a comparative example, 5000 composite liner sheets were produced. In addition, pneumatic tires including the composite liner sheets were produced through the composite liner sheet winding step S2, the carcass ply winding step S3, the bead core mounting step S4, and the shaping step S5 by conventional methods, and further through a well-known vulcanization step. Each of the composite liner sheets of the comparative example was obtained by manually overlapping the sheet-shaped liner and the sheet-shaped chafers by a worker. The common specifications of the composite liner sheets are as follows.

First sheet rubber: 110000 mm × 500 mm × 1.0 mm (length × width × thickness)

Second sheet rubber: 110000 mm × 570 mm × 1.0 mm (length × width × thickness)

Chafer rubber: 110000 mm × 45 mm × 0.8 mm (length × width × thickness)

<Process Capability Index Cpk>

A variation range (tolerance) of the difference Δ was set to ±5.0 mm, and a process capability index Cpk value was calculated. The Cpk value was calculated by the following equation (1).

$$Cpk \text{ value} = (1 - K) \times Cp \qquad (1)$$

$$Cp = (U - L) / (6 \times \sigma)$$

$$K = |(U + L) / 2 - \mu| / (U - L) / 2 : \text{degree of bias}$$

U: upper limit standard (tolerance upper limit)
L: lower limit standard (tolerance lower limit)
$\sigma$: standard deviation of variation
$\mu$: average value of variation

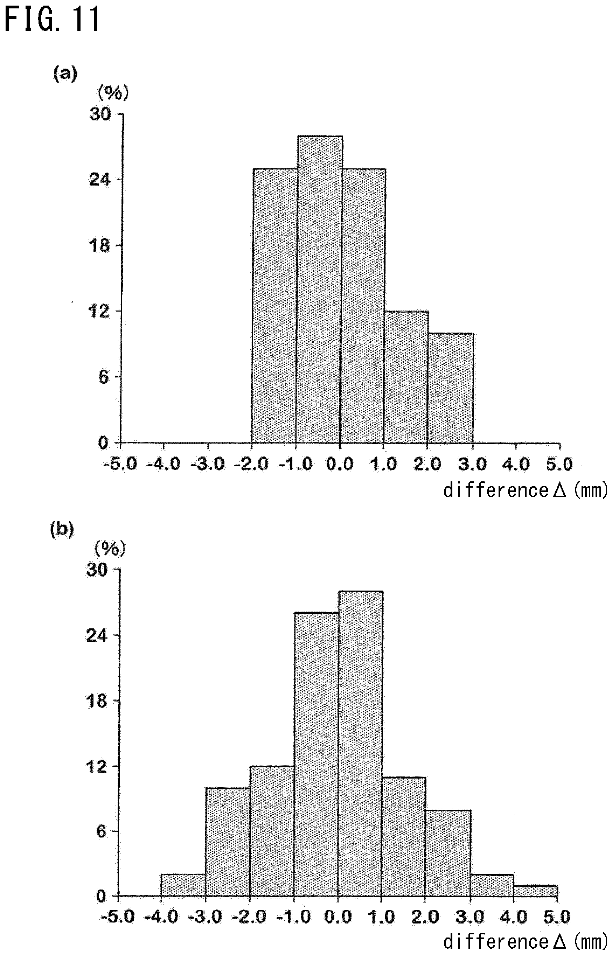

The result is better when the Cpk value is higher. In addition, graphs each showing the ratio of the difference $\Delta$ using the measurement result are shown in FIG. 11. FIG. 11(a) shows the ratio of the difference $\Delta$ by the production method according to the present embodiment. FIG. 11(b) shows the ratio of the difference $\Delta$ by the production method of the comparative example.

<Material Return Ratio/Tire Scrap Ratio>

On the basis of the difference $\Delta$ measured during the calculation of the process capability index, the ratio of composite liner sheets returned to the composite liner sheet forming step as a result of an inspection after the composite liner sheet winding step S2, and the ratio of pneumatic tires that failed a uniformity inspection were calculated. The results are represented as a percentage. The smaller the value is, the better the result is.
The test results are shown in Table 1.

[Table 1]

|  | Example | Comparative Example |
| --- | --- | --- |
| Process capability index (Cpk) | 1.195 | 0.948 |
| Material return ratio [%] | 0 | 2.0 |
| Tire scrap ratio [%] | 0 | 0.12 |

As a result of the tests, it was confirmed that, with the production method of the example, a composite liner sheet can be produced more accurately than with the production method of the comparative example. In addition, with the production method of the example, all the values of the difference $\Delta$ fall within the range of -2.0 to 3.0 mm as shown in FIG. 11(a). Furthermore, about 85% or more of all the values fall within the range of -2.0 to 2.0 mm. Moreover, with the production method of the comparative example, as shown in FIG. 11(b), all the values of the difference $\Delta$ fall within the range of -4.0 to 5.0 mm, and the range of the difference is wider than that of the example. In addition, about 75% of all the values fall within the range of -2.0 to 2.0 mm and is smaller than that in the example. It should be noted that the sign "-" of the difference $\Delta$ indicates that the attached position of the sheet-shaped chafer is located at the center side in the width direction of the sheet-shaped liner with respect to the predetermined position.
The technology for detecting an edge position of a sheet in a composite sheet can also be applied to detection of an edge position in another material for a tire.

Claims

1. An edge detection device (22) for detecting edges (36) of one sheet (26) located on another sheet (26) in a composite sheet (24) formed by attaching at least two sheets (26) such that positions of edges (36) of the sheets (26) are displaced in a width direction, the edge detection device (22) comprising:

   a line camera (38, 238) configured to take an image of the entirety in the width direction of the composite sheet (24); and
   a pair of lightings (40, 240) configured to apply light to the composite sheet (24), wherein

a field of view of the line camera (38, 238) includes the edges (36) of the one sheet (26) located on the other sheet (26),

**characterized in that** the pair of lightings (40, 240) is disposed with the line camera (38, 238) located therebetween in a longitudinal direction of the composite sheet (24), wherein, to a portion to which light of one lighting (40, 240) is applied, light of the other lighting (40, 240) is applied.

2. The edge detection device (22) according to claim 1, wherein the line camera (38, 238) takes an image in the width direction of the composite sheet (24) located directly below the line camera (38, 238).

3. The edge detection device (22) according to claim 1 or 2, wherein an angle ($\alpha$) formed by a direction (L1) of the light of the one lighting (40, 240) with respect to an optical axis (AL) of the line camera (38, 238) is equal to an angle ($\beta$) formed by a direction (L2) of the light of the other lighting (40, 240) with respect to the optical axis (AL) of the line camera (38, 238).

4. The edge detection device (22) according to any one of claims 1 to 3, further comprising a conveyance means (52) configured to convey the composite sheet (24) in the longitudinal direction thereof.

5. A production method for a pneumatic tire (101) including a liner (111) and a pair of chafers (112) disposed on both end portions in a tire axial direction of the liner (111), the production method comprising

a composite liner sheet forming step (S1) of forming a composite liner sheet (113) obtained by combining an unvulcanized sheet-shaped liner (111N) and a pair of unvulcanized sheet-shaped chafers (112N), wherein the composite liner sheet forming step (S1) includes:
a liner forming step (s1) of forming the sheet-shaped liner (111N) by overlapping a first rubber sheet (114) and a second rubber sheet (115) wider than the first rubber sheet (114),
**characterized in that** the composite liner sheet forming step (S1) further includes

a detection step (s2) of detecting both ends (114e) of the first rubber sheet (114); and
an attaching step (s3) of attaching the sheet-shaped liner (111N) and each of the sheet-shaped chafers (112N) on the basis of positions of detected both ends (114e) of the first rubber sheet (114).

6. The production method for the pneumatic tire (101) according to claim 5, wherein an imaging means (123, 238) for taking an image of both ends (114e) of the first rubber sheet (114) is used in the detection step (s2).

7. The production method for the pneumatic tire (101) according to claim 5 or 6, wherein, in the sheet-shaped liner (111N), the second rubber sheet (115) extends to outer sides of both ends (114e) of the first rubber sheet (114).

8. The production method for the pneumatic tire (101) according to claim 7, wherein, in the attaching step (s3), the second rubber sheet (115) and the sheet-shaped chafers (112N) overlap each other on the outer sides of both ends (114e) of the first rubber sheet (114).

**Patentansprüche**

1. Kantendetektionsvorrichtung (22) zum Detektieren von Kanten (36) einer Bahn (26), die sich an einer anderen Bahn (26) in einer Verbundbahn (24) befindet, die durch Anbringen von mindestens zwei Bahnen (26) gebildet ist, so dass die Positionen der Kanten (36) der Bahnen (26) in einer Breitenrichtung verschoben sind, wobei die Kantendetektionsvorrichtung (22) umfasst:

eine Zeilenkamera (38, 238), die so konfiguriert ist, dass sie ein Bild der Gesamtheit in der Breitenrichtung der Verbundbahn (24) aufnimmt; und
ein Paar Beleuchtungen (40, 240), die so konfiguriert sind, dass sie Licht auf die Verbundbahn (24) aufbringen, wobei
ein Sichtfeld der Zeilenkamera (38, 238) die Kanten (36) der einen Bahn (26), die sich an der anderen Bahn (26) befindet, einschließt,
**dadurch gekennzeichnet, dass** das Paar Beleuchtungen (40, 240) so angeordnet ist, dass sich die Zeilenkamera (38, 238) in einer Längsrichtung der Verbundbahn (24) dazwischen befindet, wobei auf einen Abschnitt, auf den Licht von einer Beleuchtung (40, 240) aufbracht wird, Licht der anderen Beleuchtung (40, 240) aufbracht wird.

**2.** Kantendetektionsvorrichtung (22) nach Anspruch 1, wobei die Zeilenkamera (38, 238) ein Bild in der Breitenrichtung der Verbundbahn (24) aufnimmt, das sich direkt unter der Zeilenkamera (38, 238) befindet.

**3.** Kantendetektionsvorrichtung (22) nach Anspruch 1 oder 2, wobei ein Winkel ($\alpha$), der durch eine Richtung (L1) des Lichts der einen Beleuchtung (40, 240) in Bezug auf eine optische Achse (AL) der Zeilenkamera (38, 238) gebildet wird, gleich einem Winkel ($\beta$) ist, der durch eine Richtung (L2) des Lichts der anderen Beleuchtung (40, 240) in Bezug auf die optische Achse (AL) der Zeilenkamera (38, 238) gebildet wird.

**4.** Kantendetektionsvorrichtung (22) nach einem der Ansprüche 1 bis 3, die ferner ein Fördermittel (52) umfasst, das so konfiguriert ist, dass sie die Verbundbahn (24) in ihrer Längsrichtung fördert.

**5.** Herstellungsverfahren für einen Luftreifen (101), der eine Auskleidung (111) und ein Paar Wulstschutzstreifen (112) umfasst, die an beiden Endabschnitten in einer axialen Richtung des Reifens der Auskleidung (111) angeordnet sind, wobei das Herstellungsverfahren umfasst

einen Verbundauskleidungsbahn-Bildungsschritt (S1) eines Bildes einer Verbundauskleidungsbahn (113), die durch Kombinieren einer unvulkanisierten bahnförmigen Auskleidung (111N) und eines Paares unvulkanisierter bahnförmiger Wulstschutzstreifen (112N) erhalten wird, wobei
der Verbundauskleidungsbahn-Bildungsschritt (S1) umfasst:
einen Auskleidungsbildungsschritt (s1) eines Bildes der bahnförmigen Auskleidung (111N) durch Überlappen einer ersten Kautschukbahn (114) und einer zweiten Kautschukbahn (115), die breiter als die erste Kautschukbahn (114) ist,
**dadurch gekennzeichnet, dass** der Verbundauskleidungsbahn-Bildungsschritt (S1) ferner umfasst

einen Detektionsschritt (s2) eines Detektierens beider Enden (114e) der ersten Kautschukbahn (114); und
einen Anbringungsschritt (s3) eines Anbringens der bahnförmigen Auskleidung (111N) und jeder der bahnförmigen Wulstschutzstreifen (112N) auf der Grundlage von Positionen von detektierten beiden Enden (114e) der ersten Kautschukbahn (114).

**6.** Herstellungsverfahren für den Luftreifen (101) nach Anspruch 5, wobei ein Bildgebungsmittel (123, 238) zum Aufnehmen eines Bildes von beiden Enden (114e) der ersten Kautschukbahn (114) in dem Detektionsschritt (s2) verwendet wird.

**7.** Herstellungsverfahren für den Luftreifen (101) nach Anspruch 5 oder 6, wobei sich die zweite Kautschukbahn (115) in der bahnförmigen Auskleidung (111N) bis zu Außenseiten von beiden Enden (114e) der ersten Kautschukbahn (114) erstreckt.

**8.** Herstellungsverfahren für den Luftreifen (101) nach Anspruch 7, wobei in dem Anbringungsschritt (s3) die zweite Kautschukbahn (115) und die bahnförmigen Wulstschutzstreifen (112N) einander an den Außenseiten beider Enden (114e) der ersten Kautschukbahn (114) überlappen.

**Revendications**

**1.** Dispositif de détection de bords (22) destiné à détecter des bords (36) d'une feuille (26) située sur une autre feuille (26) dans une feuille composite (24) formée en fixant au moins deux feuilles (26) de telle sorte que des positions de bords (36) des feuilles (26) sont déplacées dans une direction de la largeur, le dispositif de détection de bord (22) comprenant :

une caméra linéaire (38, 238) configurée pour prendre une image de la totalité dans la direction de la largeur de la feuille composite (24) ; et
une paire d'éclairages (40, 240) configurés pour appliquer une lumière sur la feuille composite (24) dans lequel un champ visuel de la caméra linéaire (38, 238) inclut les bords (36) de ladite une feuille (26) située sur l'autre feuille (26),
**caractérisé en ce que** la paire d'éclairages (40, 240) sont disposés avec la caméra linéaire (38, 238) située entre ceux-ci dans une direction longitudinale de la feuille composite (24), dans lequel, sur une portion sur laquelle une lumière de l'un des éclairages (40, 240) est appliquée, une lumière de l'autre éclairage (40, 240) est appliquée.

2. Dispositif de détection de bords (22) selon la revendication 1, dans lequel la caméra linéaire (38, 238) prend une image dans la direction de la largeur de la feuille composite (24) située directement en dessous de la caméra linéaire (38, 238).

3. Dispositif de détection de bords (22) selon la revendication 1 ou 2, dans lequel un angle ($\alpha$) formé par une direction (L1) de la lumière dudit un éclairage (40, 240) par rapport à un axe optique (AL) de la caméra linéaire (38, 238) est égal à un angle ($\beta$) formé par une direction (L2) de la lumière de l'autre éclairage (40, 240) par rapport à l'axe optique (AL) de la caméra linéaire (38, 238).

4. Dispositif de détection de bords (22) selon l'une quelconque des revendications 1 à 3, comprenant en outre un moyen de convoyage (52) configuré pour convoyer la feuille composite (24) dans la direction longitudinale de celle-ci.

5. Procédé de production pour un bandage pneumatique (101) incluant une doublure (111) et une paire de bandelettes de talon (112) disposées sur les deux portions d'extrémité dans une direction axiale du pneumatique de la doublure (111), le procédé de production comprenant une étape de formage de feuille de doublure composite (S1) consistant à former une feuille de doublure composite (113) obtenue en combinant une doublure en forme de feuille non vulcanisée (111N) et une paire de bandelettes de talon en forme de feuille non vulcanisées (112N), dans lequel l'étape de formage de feuille de doublure composite (S1) inclut :

une étape de formage de doublure (s1) consistant à former la doublure en forme de feuille (111N) en superposant une première feuille de caoutchouc (114) et une seconde feuille de caoutchouc (115) plus large que la première feuille de caoutchouc (114),
**caractérisé en ce que** l'étape de formage de feuille de doublure composite (S1) inclut en outre
une étape de détection (s2) consistant à détecter les deux extrémités (114e) de la première feuille de caoutchouc (114) ; et
une étape de fixation (s3) consistant à fixer la doublure en forme de feuille (111N) et chacune des bandelettes de talon en forme de feuille (112N) sur la base de positions des deux extrémités détectées (114e) de la première feuille de caoutchouc (114).

6. Procédé de production pour le bandage pneumatique (101) selon la revendication 5, dans lequel un moyen d'imagerie (123, 238) destiné à prendre une image des deux extrémités (114e) de la première feuille de caoutchouc (114) est utilisé dans l'étape de détection (s2).

7. Procédé de production pour le bandage pneumatique (101) selon la revendication 5 ou 6, dans lequel, dans la doublure en forme de feuille (111N), la seconde feuille de caoutchouc (115) s'étend jusqu'à des côtés extérieurs des deux extrémités (114e) de la première feuille de caoutchouc (114).

8. Procédé de production pour le bandage pneumatique (101) selon la revendication 7, dans lequel, dans l'étape de fixation (s3), la seconde feuille de caoutchouc (115) et les bandelettes de talon en forme de feuilles (112N) se recouvrent mutuellement sur les côtés extérieurs des deux extrémités (114e) de la première feuille de caoutchouc (114).

# FIG. 1

FIG. 2

# FIG. 3

# FIG. 4

FIG. 5

# FIG. 6

(a)

(b)

FIG. 7

# FIG. 8

(a)

127

A        A

127b

112N

127d

127c

127a

Y
X

(b)

112N                127d

127b

127c

127        112N    127a

Z
X

EP 3 766 679 B1

# FIG. 9

(a)

(b)

(c)

# FIG. 10

# FIG. 11

(a)

(b)

FIG. 12

FIG. 13

FIG. 14

**EP 3 766 679 B1**

**Patent documents cited in the description**

- JP 2001201335 A
- WO 2005093368 A1
- EP 2078955 A1
- DE 102012016587 A1
- JP 2015000541 A
- US 6280548 B1
- WO 2010013553 A1